# EUROPEAN PATENT APPLICATION

(11) **EP 4 366 227 A1**
(43) Date of publication of application: **08.05.2024**
(21) Application number: 22205525.3
(22) Date of filing: 04.11.2022
(51) Int. Cl.: H04L 9/00, H04L 9/32

(54) **IMMUTABLE AND TAMPER-RESISTANT EVENT DATA**

(71) Applicant: ABB SCHWEIZ AG, 5400 Baden (CH)
(72) Inventor: GAMER, Thomas, 68782 Brühl (DE); FINSTER, Soeren, 76139 Karlsruhe (DE); KOHNHAEUSER, Florian, 64560 Riedstadt (DE); COPPIK, Nicolas, 64293 Darmstadt (DE); POWROZNIK, Piotr, 32-087 Zielonki (PL)
(74) Representative: Maiwald GmbH

(57) **Abstract**

A computer-implemented method for providing immutable and tamper-resistant event data of an industrial control system, comprising: receiving data indicating an event from at least one industrial device; providing the received data indicating an event to nodes of a distributed ledger or a central implementation with characteristics similar to distributed ledger; in response to receiving data indicating an event, selecting at least one of the nodes of a distributed ledger and writing a transaction into the distributed ledger, wherein the writing of a transaction into the distributed ledger is authorized by the selected at least one of the nodes of the distributed ledger, wherein the transaction comprises transaction data, wherein the transaction data allows an accessing of event data; wherein the transaction data comprises a pointer pointing to original or pre-processed data existing in one or more industrial databases of the at least one industrial device; providing immutable and tamper-resistant event data, event reaction data, control data, or training data for training a machine learning or an artificial intelligence based industrial control system based on the transaction data.

## Description

### TECHNICAL FIELD

The present disclosure relates to a computer-implemented method for providing immutable and tamper-resistant event data of an industrial control system and to industrial control system for providing immutable and tamper-resistant event data.

### TECHNICAL BACKGROUND

The general background of this disclosure is the providing of event data of an industrial control system, wherein these event data are immutable and tamper-resistant.

Typically, in today's industrial control systems, data are stored in various databases, e.g. historians containing time-series data, file archives directly on the device to be downloaded for further analysis, configuration databases of the DCS, edge systems on premise or databases in the Cloud collecting aggregated data and KPIs. Data needed to analyze and react to an event, an issue in the product or system, or to be used to train a machine learning (ML) or artificial intelligence (Al) algorithm are typically distributed over multiple databases and system entities, and is pulled by a human operator depending on his needs and understanding of the situation. This makes the data processing slow and choosing of data error-prone. Further, today's ML or AI algorithms applied in industrial control systems, in particular the data used to train today's ML or AI algorithms for industrial control systems, do not have a high level of trust because of missing transparency of the data sources and the changeability of the industrial control systems and/or the data being provided by the industrial control systems.

Hence, there is a need to provide data of an industrial control system having following key aspects: immutability, transparency, high-availability of information in each participating device, long-term access to reliable references, easy access to information, and proven information integrity for important data.

### SUMMARY OF THE INVENTION

In one aspect of the invention a computer-implemented method for providing immutable and tamper-resistant event data of an industrial control system, comprising:
receiving data indicating an event from at least one industrial device;
providing the received data indicating an event to nodes of a distributed ledger;
in response to receiving data indicating an event, selecting at least one of the nodes of a distributed ledger and writing a transaction into the distributed ledger,
   wherein the writing of a transaction into the distributed ledger is authorized by the selected at least one of the nodes of the distributed ledger,
   wherein the transaction comprises transaction data,
   wherein the transaction data allows an accessing of event data;
   wherein the transaction data comprises a pointer pointing to original or pre-processed data existing in one or more industrial databases of the at least one industrial device;
providing immutable and tamper-resistant event data based on the transaction data.

The term industrial control system as used herein is to be understood broadly and represents any system being able to control an industrial area, a domain, a factory, or a plant. The industrial control system can control the whole industrial area, factory, domain or plant or one or more parts of the whole industrial area, factory, domain or plant. Further, the industrial control system can control a whole manufacturing process/production process, e.g. a product in the industrial area, factory, domain or plant, and/or one or more sub processes of the whole manufacturing process/production process. Alternatively and/or additionally, the industrial control system may be a centralized or a decentralized system, but is not limited thereto. Therefore, the industrial control system may be linked to further control systems and comprises corresponding connection units to be connected to the further control systems, but is not limited thereto. Further, the industrial control system may comprise a user interface, a terminal and/or a display for providing an output to and/or receiving an input from a human operator. The industrial control system may be a computer-based system, in particular a machine learning, ML,-based system or an artificial intelligence, AI,-based system.

The term industrial device as used herein is to be understood broadly and represents any devices, machines and apparatus being located/arranged within the whole industrial area, factory, domain or plant and take part in the whole or partial manufacturing process/production process. Exemplary, the industrial device may be a machine, a sensor within a machine and/or a processing unit pre-processing and/or aggregating data indicating an event received from one or more sensors and/or machines. The industrial devices are controlled by the industrial control system. Each one of the industrial devices may comprise an own control unit and an industrial database, but is not limited thereto. Alternatively, the industrial devices may be connected to a central device comprising a control unit and an industrial database. The control unit may be configured for controlling just the industrial device, e.g. the manufacturing steps, the manufacturing speed of the corresponding industrial device. The industrial database may be memory being configured for storing industrial device specific parameter and/or information, but are not limited thereto. Industrial device specific parameter and/or information may include data indicating the manufacturing quantity, the manufacturing quality, and or the occurrence of events at, on or in the industrial device.

The term data indicating an event as used herein is to be understood broadly and represents any data indicating an event, in particular the appearance of an event at, on, and/or in an industrial device. The data indicating an event can be stored on an industrial database. The data indicating an event may comprise information being relevant for/to specific events, batches, or behaviors, but are not limited thereto. Examples for such specific information are quality data related to an individual produced batch, failure information related to an individual motor failure, alarm description and relevant sensor and Key Performance Indicators (KPI) values related to an individual alarm of the distributed control system (DCS), or sensor, control, and configuration parameters at an individual point in time related to an individual product of a discrete manufacturing system, but is not limited thereto. The data indicating an event can be provided by the machine, a sensor, a processing unit and/or the industrial control system. The data indicating an event may be metadata, i.e. un-processed data, or processed, i.e. preprocessed data.

The term event data represents any original or preprocessed data of an industrial system on which the pointer points being provided by the computer-implemented method, being immutable and tamper-resistant, and being based on the transaction data written in the distributed ledger.

The term immutable as used herein is to be understood broadly and represents that data, in particular event data, cannot be changed, amended, and manipulated. In other words, the immutable data, in particular datasets of the event data, may comprise solely write and read, but not amend, permission, i.e. in the dataset of the event data only event date can be written and read.

The term tamper-resistant as used herein is to be understood broadly and represents that data, in particular the event data, are sustainable safe against tampering, changing, amending, and manipulating.

The term nodes of the distributed ledger as used herein is to be understood broadly and represents any system points forming a distributed ledger which, in response to receiving data indicating an event, can be selected, can write a transaction including transition data into the distributed ledger, and can authenticate the transaction, such that a record of each item can be generated and a consensus on its veracity can be created. For instance, the nodes of the distributed ledger may be edge devices in an industrial control system. The term edge device as used herein is to be understood broadly and represents any devices being more powerful, i.e. having a higher working memory and/or powerful processor, than typical gateways and middleware boxes which often serve as protocol translator only or control units being arranged within the industrial devices, but are not limited thereto.

The term transaction as used herein is to be understood broadly and represents any item being written in/on the distributed ledger. For instance, a transaction may comprise the potential structure and fields: signed hash value (assuming the validation process is based e.g. on a pool of validators), status: [created, confirmed, ...], time, size, contained in block number, number of confirmations (assuming the validation process is based e.g. on a pool of validators), input: set of labels, and value: set of pointers, optional pointer-specific labels, and integrity protection information of data pointed to (e.g., signed hash of data pointed to). Alternatively, the term transaction also includes a block and its potential structure and fields: block number, signed hash value (assuming the validation process is based e.g. on a pool of validators), time, size, number of contained transactions, number of confirmations (assuming the validation process is based e.g. on a pool of validators), and list of contained transactions. The term transaction data as used herein is to be understood broadly and represents any data being included in the transaction. The transaction data may comprise a pointer and a label, but is not limited thereto.

The term distributed ledger as used herein is to be understood broadly and represents any ledger of the distributed ledger technology. The distributed leger technology includes a plurality of different type. Exemplary types are DAG (Directed Acyclic Graph), like IOTA, Blockchain, and Hybride, but are not limited thereto. In the distributed ledger, transactions including transaction data are written, in response to receiving data indicating an event. The distributed ledger is formed by nodes, wherein the nodes, in particular all of the nodes, run a ledger platform, defines the execution environment, provide rules and processes for creating, maintaining, and validating the ledger, as well as technologies to implement the ledger, but are not limited thereto. The execution environment may be public ledgers, private ledgers, hybrid ledgers, or even central solutions exposing the same characteristics as distributed ledger technologies, if needed, but are not limited thereto. The rules and processes for creating, maintaining, and validating the ledger may comprise block and transaction formats, block creation, and consensus process, but are not limited thereto. The technologies to implement the ledger may comprise hash algorithms, public/private key algorithms, and consensus algorithm, but are not limited thereto.

The term selecting/selection as used herein is to be understood broadly and represents any mathematical procedure for selecting at least one node, in particular only one node, out of a plurality of nodes. A selection process, in particular the validation/consensus mechanism, may use prove of stake protocols or pool of pre-selected validators protocols. The prove of stake protocols are a process that a distributed ledger, e.g. a blockchain network, uses to reach a consensus about which participant, in particular node, is allowed to generate the next block and/or transaction. A weighted random selection is used, whereby the weights of the individual participants/nodes are determined based on the duration of participation and/or assets (the "stake"). The pool of pre-selected validators protocols are a process at which all nodes participating in the distributed ledger are defined as a pool of validators. By a selection process a node/participant/validator will then select a validator for each block or transaction, to validate/authenticate the contents of the block or transaction and confirm correctness. For instance, the selection process may be provided by a random generator using a random selection process, or selection units using a round-robin selection process and/or a weighted selection process. The random selection process provides a selection by random number generators randomly selecting one or many validators from the pool of validators. The round-robin selection process provides a selection by selecting one or many validators from a ordered list of the pool of validators in a way that every validator gets selected after a specific time and - neglecting churn or addition - every validator gets selected evenly often. The weighted selection process provides a selection by assigning weights to each validator from the pool of validators, e.g., based on trust, previous correct validations, their criticality for the industrial control process, etc. The number of validators N can also be greater than 1, e.g., in order to further increase security and robustness against a small number of malicious participants/nodes. Additionally, in a further embodiment of the invention, validators might have different priority/weight factors for their validations/confirmations, e.g. based on criticality for the industrial control process or a trust factor based on previous correct validations, but is not limited thereto. By using the prove of stake protocols or the pool of pre-selected validators protocols, a time- and energy-intensive mining is not required and it is not possible to take over the network simply by owning computing power. A proof of work approach is not and shall not be used, because this approach requires a time- and energy-intensive mining and it is possible to take over the network simply by owning computing power. Interference of any distributed ledger technology with industrial control is not acceptable.

The term authorized as used herein is to be understood broadly and represents any authorization process for authorizing a writing of a transaction in/on a distributed ledger. Exemplary, an authorization process may be a process signing and/or using a signing of a hash function, but is not limited thereto. A hash function is a function providing a conversion of a string into a fixed-length, usually shorter, numeric value or key. The numeric value is the hash value and another representation of the original string. Hash values are used to index and retrieve items in a database. Additionally, the authorizing may be provided, beside the signing of a hash function, by additional information like time stamp, a sequence/block number, but is not limited thereto.

The term pointer as used herein is to be understood broadly and represents an item pointing to specific information of the industrial devices, e.g. relevant to specific events, batches, or behaviors being stored in the industrial database. The pointer may be a path indicating where, i.e. at which database or databases, the specific information of the industrial devices with respect to a specific event are stored. The pointer pointing to data indicating an event is provided to nodes of a distributed ledger in order to be included in the distributed ledger. The pointer may be provided to one single node of the distributed ledger, to at least two selected nodes of the distributed ledger or to all nodes of the distributed ledger.

By using a distributed ledger in an industrial control system and storing pointers in/on the distributed ledger, event data can be provided having the key aspects of immutability, transparency, high-availability of information in each participating device, long-term access to reliable references, easy access to information, and proven information integrity for important data. Additionally, the distributed ledger will not be filled with industrial data such as measurements, configurations, alarms. Therefore, the trust in data of an industrial control system and a rapid growth of disk space of the distributed ledger can be avoided.

In an embodiment of the method for providing immutable and tamper-resistant event data of an industrial control system, the distributed ledger is a public ledger.

The term public ledger as used herein is to be understood broadly and represents any open network that allow anyone to participate in the network. In this type of distributed ledger anyone can join the network and read, write, or participate within the distributed ledger. A public distributed ledger is decentralized and does not have a single entity which controls the network. Data on a public distributed ledger are secure as it is not possible to modify or alter data once they have been validated on the distributed ledger.

By using a public distributed ledger, the distributed ledger includes a high security because it is secure due to mining (e.g. 51% rule), is an open environment such that it is open for all, has an anonymous nature such that everyone is anonymous and there is no need to use real names, or real identities. Further, public distributed ledger provides full transparency because it is allowed to see the ledger anytime, such that there is no scope for any corruption or any discrepancies and everyone has to maintain the ledger and participate in consensus, provides a true decentralization because of its decentralized entity such that the responsibility of maintaining the network is solely on the nodes, includes a full user empowerment such that all of the users are empowered as there is no central authority to look over their every move, is immutable such that something which is written in/on the distributed ledger cannot be changed, and is distributed because the database is not centralized like in a client-server approach and all nodes are in the distributed ledger participate in the transaction validation.

In an embodiment of the method for providing immutable and tamper-resistant event data of an industrial control system, the distributed ledger is a private ledger.

The term private ledger as used herein is to be understood broadly and represents any distributed ledger which is managed by a network administrator and participants need consent to join the network, e.g. a private blockchain is a permissioned blockchain. There are one or more entities which control the network and this leads to reliance on third-parties to transact. In this type of distributed ledger only entity participating in the transaction have knowledge about the transaction performed whereas others will not able to access it i.e. transactions are private.

By using a private distributed ledger, the distributed ledger includes full privacy because it is focused on privacy concerns, includes high efficiency and faster transactions. Also the private distributed ledger has much less nodes to participate in the ledger such that the performance is faster, and has a better scalability because it is able to add nodes and services on demand.

In an embodiment of the method for providing immutable and tamper-resistant event data of an industrial control system, the distributed ledger is a central ledger having characteristics similar to a private ledger.

In an embodiment of the method for providing immutable and tamper-resistant event data of an industrial control system, the nodes of the distributed ledger are edge devices.

Using edge devices as nodes of the distributed ledger leads to an increased performance of the distributed ledger, because of the higher power, i.e. edge devices have a higher working memory and/or powerful processor than typical gateways and middleware boxes which often serve as protocol translator only or control units being arranged within the industrial devices of the edge devices.

In an embodiment of the method for providing immutable and tamper-resistant event data of an industrial control system, the transaction data further comprises a label.

The term label as used herein is to be understood broadly and represents any tag configured for classifying or tagging the pointers. The label may be e.g. "quality data", "batch production", "alarm", "failure", "normal behavior" but is not limited thereto. The label are comprised in the pointer.

In an embodiment of the method for providing immutable and tamper-resistant event data of an industrial control system, the selection of the at least one of the nodes of the ledger to authorize a transaction is provided by a random selection process, a round-robin selection process, and/or a weighted selection process.

In an embodiment of the method for providing immutable and tamper-resistant event data of an industrial control system, the method further comprises: providing event reaction data indicating a reaction of a human operator and/or a reaction of the industrial control system with respect to an event based on the immutable and tamper-resistant event data.

The term event reaction data as used herein is to be understood broadly and represents any data being able to provide, propose/recommend and/or control a human operator and/or the industrial control system, in particular an industrial device, with respect to a specific event. Exemplary, the event reaction data may be event specific instructions how to overcome an event without any losses, e.g. of quality or machines. The event reaction data can be provided/stored on the pointer and therefore be pre-provided/pre-processed data. Alternatively, the event reaction data may be data being provided based on the immutable and tamper-resistant event data by an event reaction data providing unit.

The providing of event reaction data leads to a semi-automatisation of the industrial control system because a human operator can be provided with an instruction how to react to the event and/or the industrial system can be provided with data controlling a reaction to a specific event.

In an embodiment of the method for providing immutable and tamper-resistant event data of an industrial control system, the method further comprises: providing control data for controlling the industrial control system based on the immutable and tamper-resistant event data and/or the event reaction data.

The term control data as used herein is to be understood broadly and represents any data being able to generally control an industrial control system. The control data may be data controlling the industrial control system and/or the industrial devices. The control data are based on the immutable and tamper-resistant event data and/or event reaction data. The control data can be provided/stored on the pointer and therefore be pre-provided/pre-processed data. Alternatively, the control data may be data being provided by a control data providing unit.

The providing of control data leads to a fully automatisation of the industrial control system, such that the industrial control system and/or the industrial devices are controlled in a continuous manner.

In an embodiment of the method for providing immutable and tamper-resistant event data of an industrial control system, the method further comprises: providing training data for training a machine learning or an artificial intelligence based industrial control system based on the immutable and tamper-resistant event data and/or the event reaction data.

The term training data as used herein is to be understood broadly and represents any data being useable for training a machine learning or an artificial intelligence based industrial control system. The training data may be the data on which the pointer points or may be data being pre-provided/pre-processed by a training data providing unit.

By training of machine learning or artificial intelligence based industrial control systems the reaction of these industrial control systems can be significant increased in time and quality. Therefore, the providing of training data for training a machine learning or an artificial intelligence based industrial control system leads to an improved industrial control system.

In another embodiment of the method for providing immutable and tamper-resistant event data of an industrial control system, the method further comprises the step of providing an identity-based security to the distributed ledger, e.g. to the nodes/participants.

The term identity-based security as used herein is to be understood broadly and represents any type of security that focuses on access to digital information or services based on the authenticated identity of an individual. For instance, an identity-based security may be the login of an account with a username and password, a fingerprinting or facial recognition, but is not limited thereto. The identity-based security may be implemented by solutions, such as IEEE 802.1AR DevID certificates, a "pluggable security module", or a built-in TPM identity, which enables applying the extension to already deployed devices that have a secure identity from their manufacturer.

Using an identity-based security ensures that the users of these digital services are entitled to what they receive. Therefore, nodes/participants and validators can provide attested evidence about their authenticity, which increases trust in information stored in the distributed ledger.

In another embodiment of the method for providing immutable and tamper-resistant event data of an industrial control system, the method further comprises the step of, in case the original data indicating an event, to which the pointers in the distributed ledger point, is moved to a different database or changes at a later point in time, providing handling of the pointer in the distributed ledger as to become stale pointer. In this case, the method further comprises the step of providing further entries to the pointer, if data indicating an event moves to a different location, with the same labels and integrity protection information, and a field noting that this supersedes a specific earlier entry.

Therefore, differences to the original entry in terms of labels or pointed-to data would then be detectable.

In another embodiment of the method for providing immutable and tamper-resistant event data of an industrial control system, the method further comprises the step of providing another layer of indirection avoiding stale pointers in case the original data indicating an event, to which the pointers in the distributed ledger point, is moved to a different database or changes at a later point in time.

The term layer of indirection as used herein is to be understood broadly and represents any method wherein the pointer points to a further pointer, rather than the data, with a (distributed) key-value store being one example how to implement such method. The key-value store comprises the pointer to the actual data pointer. Integrity protection would still work, but changes in the indirection layer wouldn't show up in the ledger. Additionally, for instance a verifiable log would be needed to track those changes.

The term layer of indirection as used herein is to be understood broadly and represents any layer in the form of a (distributed) key-value store, and pointing to that, rather than the actual data pointer. The key-value store comprises the pointer to the actual data pointer. Integrity protection would still work, but changes in the indirection layer wouldn't show up in the ledger. Additionally, for instance a verifiable log would be needed to track those changes.

In a further aspect an industrial control system for providing immutable and tamper-resistant event data is presented, comprising: at least one receiving unit configured for receiving data indicating an event from at least one industrial device and providing these data to the industrial control system; nodes of a distributed ledger configured for receiving the provided data indicating an event, for selecting at least one of the nodes of a distributed ledger in response to receiving data indicating an event, for writing a transaction into the distributed ledger in response to receiving data indicating an event, for authorizing the writing of a transaction into the distributed ledger by the selected at least one node (32) of the distributed ledger, wherein the transaction comprises transaction data, wherein the transaction data allows for accessing event data; wherein the transaction data comprises a pointer pointing to original or pre-processed data existing in one or more industrial databases of the at least one industrial device; a first providing unit (34) configured for providing immutable and tamper-resistant event data based on the transaction data.

In an embodiment of the industrial control system, the system further comprises: a further providing unit configured for providing event reaction data indicating a reaction of a human operator and/or a reaction of the industrial control system with respect to an event based on the immutable and tamper-resistant event data.

In an embodiment of the industrial control system, the system further comprises: a further providing unit configured for providing control data for controlling the industrial control system based on the immutable and tamper-resistant event data and/or the event reaction data.

Any disclosure and embodiments described herein relate to the method and the system, lined out above and vice versa. Advantageously, the benefits provided by any of the embodiments and examples equally apply to all other embodiments and examples and vice versa.

As used herein "determining" also includes "initiating or causing to determine", "generating" also includes "initiating or causing to generate" and "providing" also includes "initiating or causing to determine, generate, select, send or receive". "Initiating or causing to perform an action" includes any processing signal that triggers a computing device to perform the respective action.

### BRIEF DESCRIPTION OF THE DRAWINGS

In the following, the present disclosure is further described with reference to the enclosed figures:
- Fig. 1: illustrates a flow diagram of a computer-implemented method for providing immutable and tamper-resistant event data of an industrial control system;
- Fig. 2: illustrates an example embodiment of a distributed ledger;
- Fig. 3: illustrates an example embodiment of an industrial control system for providing immutable and tamper-resistant event data.

### DETAILED DESCRIPTION OF EMBODIMENT

The following embodiments are mere examples for the method and the system disclosed herein and shall not be considered limiting.

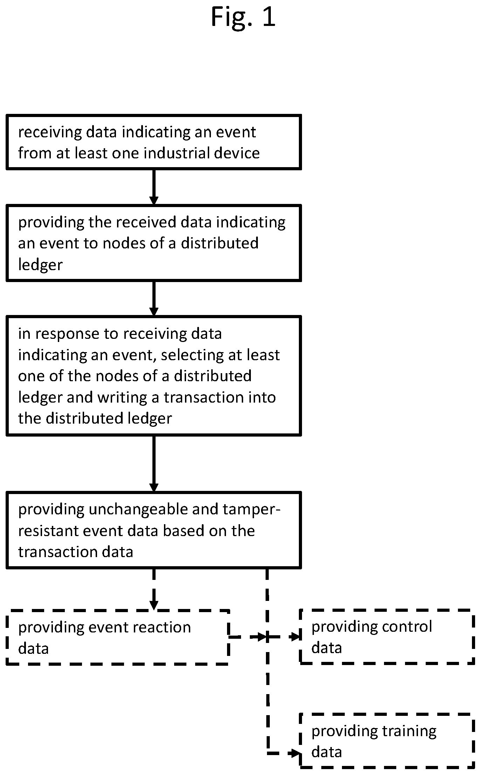

Fig. 1 illustrates a flow diagram of a computer-implemented method for providing immutable and tamper-resistant event data of an industrial control system. In a first step, the data indicating an event are received from at least one industrial device. The data indicating an event are pre-processed data provided by a pre-processing unit based on sensor data of a machine. In a second step, the received data indicating an event are provided to nodes of a distributed ledger. In response to the receiving of the data indicating an event, at least one of the nodes of a distributed ledger is selected and a transaction is written into the distributed ledger. The selection of the at least one node of the ledger to authorize a transaction is provided by a random selection process. By writing a transaction into the distributed ledger, this transaction is also written in all copies of the distributed ledger being comprised in the nodes of the distributed ledger. The writing of a transaction into the distributed ledger is authorized by the selected at least one of the nodes of the distributed ledger. The authorization is provided by using a hash function. The transaction comprises transaction data, wherein the transaction data allows an accessing of event data and wherein the transaction data comprises a pointer pointing to original or pre-processed data existing in one or more industrial databases of the at least one industrial device. In a third step immutable and tamper-resistant event data based on the transaction data are provided.

Optionally, the computer-implemented method further comprises the step of providing event reaction data indicating a reaction of a human operator and/or a reaction of the industrial control system with respect to an event based on the immutable and tamper-resistant event data. The event reaction data are provided via a display to a human operator and/or are provided via a data bus to the industrial control system.

Optionally, the computer-implemented method further comprises the step of providing control data for controlling the industrial control system based on the immutable and tamper-resistant event data and/or the event reaction data. The control data are provided via a display to a human operator and/or are provided via a data bus to the industrial control system.

Optionally, the computer-implemented method further comprises the step of providing training data for training a machine learning or an artificial intelligence based industrial control system based on the immutable and tamper-resistant event data and/or the event reaction data. The training data are provided via a display to a human operator and/or are provided via a data bus to a machine learning or an artificial intelligence based industrial control system.

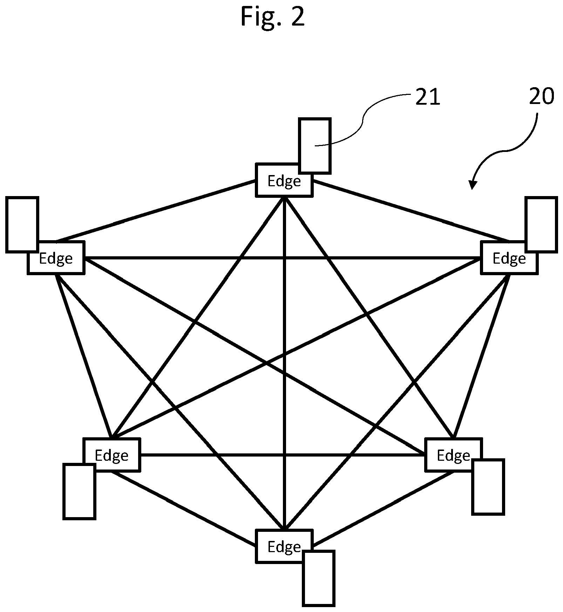

Fig. 2 illustrates an example embodiment of a distributed ledger. The distributed ledger 20 comprises a plurality of edge devices. All edge devices are wireless or by wire connected, in particular electrically connected, to each other. Each one of the edge devices comprises a copy of the distributed ledger 21 including pointers pointing to original or pre-processed data existing in an industrial database of the at least one industrial device.

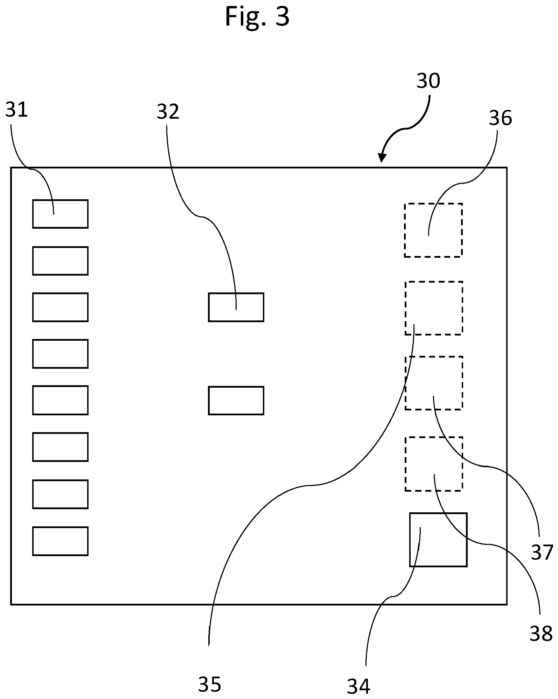

Fig. 3 illustrates an example embodiment of an industrial control system for providing immutable and tamper-resistant event data. The industrial control system 30 comprises a plurality of receiving units 31 configured for receiving data indicating an event from at least one industrial device and providing these data to the industrial control system 30.

The receiving units 31 are connected electrically and/or communicatively directly or indirectly with the industrial devices. The providing of the data indicating an event to the industrial control system 30 is provided wireless or by wire. Further, the industrial control system 30 comprises nodes 32 of a distributed ledger configured for receiving the provided data indicating an event, for selecting at least one of the nodes 32 of a distributed ledger in response to receiving data indicating an event, for writing a transaction into the distributed ledger in response to receiving data indicating an event, for authorizing the writing of a transaction into the distributed ledger by the selected at least one node 32 of the distributed ledger. The nodes 32 of the distributed ledger are connected electrically and/or communicatively directly or indirectly to each other. Furthermore, the industrial control system 30 comprises a first providing unit 34 configured for providing immutable and tamper-resistant event data based on the transaction data.

Optionally, the industrial control system 30 may further comprise a third providing unit 36 providing, event reaction data indicating a reaction of a human operator and/or a reaction of the industrial control system with respect to an event based on the immutable and tamper-resistant event data. The third providing unit 36 comprises a display displaying the event reaction data to a human operator. The event reaction data include an instruction how to overcome a specific event. The third providing unit 36 is electrically/communicatively coupled by wire or wireless to the first providing unit 34.

Optionally, the industrial control system 30 may further comprise a fourth providing unit 37 providing control data for controlling the industrial control system based on the immutable and tamper-resistant event data and/or the event reaction data. The control data include data for automatically controlling the industrial control system for overcoming a specific event. The fourth providing unit 37 is electrically/communicatively coupled by wire or wireless to the first providing unit 34 and/or the third providing unit 36.

Optionally, the industrial control system 30 may further comprise a fifth providing unit 38 providing training data for training a machine learning or an artificial intelligence based industrial control system. The training data are the data to which the pointer points in at least one database of the industrial device. The fifth providing unit 38 is electrically/communicatively coupled by wire or wireless to the first providing unit 34, third providing unit 36 and/or the fourth providing unit 37.

The present disclosure has been described in conjunction with a preferred embodiment as examples as well. However, other variations can be understood and effected by those persons skilled in the art and practicing the claimed invention, from the studies of the drawings, this disclosure and the claims. Notably, in particular, the any steps presented can be performed in any order, i.e. the present invention is not limited to a specific order of these steps. Moreover, it is also not required that the different steps are performed at a certain place or at one node of a distributed system, i.e. each of the steps may be performed at a different nodes using different equipment/data processing units.

In the claims as well as in the description the word "comprising" does not exclude other elements or steps and the indefinite article "a" or "a" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A computer-implemented method for providing immutable and tamper-resistant event data of an industrial control system, comprising:
receiving data indicating an event from at least one industrial device;
providing the received data indicating an event to nodes of a distributed ledger;
in response to receiving data indicating an event, selecting at least one of the nodes of a distributed ledger and writing a transaction into the distributed ledger,
wherein the writing of a transaction into the distributed ledger is authorized by the selected at least one of the nodes of the distributed ledger,
wherein the transaction comprises transaction data,
wherein the transaction data allows an accessing of event data;
wherein the transaction data comprises a pointer pointing to original or pre-processed data existing in one or more industrial databases of the at least one industrial device;
providing immutable and tamper-resistant event data based on the transaction data.

2. Method according to claim 1,
wherein the distributed ledger is a public ledger.

3. Method according to any one of the preceding claims,
wherein the distributed ledger is a private ledger.

4. Method according to any one of the preceding claims,
wherein the distributed ledger is a central ledger having characteristics similar to a private ledger.

5. Method according to any one of the preceding claims,
wherein the nodes of the distributed ledger are edge devices.

6. Method according to any one of the preceding claims,
wherein the transaction data further comprises a label.

7. Method according to any one of the preceding claims,
wherein the selection of the at least one of the nodes of the ledger to authorize a transaction is provided by a random selection process, a round-robin selection process, and/or a weighted selection process.

8. Method according to any one of the preceding claims, further comprising:
providing event reaction data indicating a reaction of a human operator and/or a reaction of the industrial control system with respect to an event based on the immutable and tamper-resistant event data.

9. Method according to any one of the preceding claims, further comprising:
providing control data for controlling the industrial control system based on the immutable and tamper-resistant event data and/or the event reaction data.

10. Method according to any one of the preceding claims, further comprising:
providing training data for training a machine learning or an artificial intelligence based industrial control system based on the immutable and tamper-resistant event data and/or the event reaction data.

11. Method according to any one of the preceding claims, further comprising:
providing an identity-based security to the distributed ledger.

12. Method according to any one of the preceding claims, further comprising:
in case the original data indicating an event, to which the pointers in the distributed ledger point, is moved to a different database or changes at a later point in time, providing handling of the pointer in the distributed ledger as a stale pointer

13. Method according to any one of the preceding claims, further comprising:
providing another layer of indirection avoiding stale pointers in case the original data indicating an event, to which the pointers in the distributed ledger point, is moved to a different database or changes at a later point in time.

14. Industrial control system (30) for providing immutable and tamper-resistant event data, comprising:
at least one receiving unit (31) configured for receiving data indicating an event from at least one industrial device and providing these data to the industrial control system (30);
nodes (32) of a distributed ledger configured for receiving the provided data indicating an event, for selecting at least one of the nodes (32) of a distributed ledger in response to receiving data indicating an event, for writing a transaction into the distributed ledger in response to receiving data indicating an event, for authorizing the writing of a transaction into the distributed ledger by the selected at least one node (32) of the distributed ledger,
wherein the transaction comprises transaction data,
wherein the transaction data allows for accessing event data;
wherein the transaction data comprises a pointer pointing to original or pre-processed data existing in one or more industrial databases of the at least one industrial device;
a first providing unit (34) configured for providing immutable and tamper-resistant event data based on the transaction data.

15. Industrial control system according to claim 14, further comprising:
a further providing unit configured for providing event reaction data indicating a reaction of a human operator and/or a reaction of the industrial control system with respect to an event based on the immutable and tamper-resistant event data.

16. Industrial control system according to claims 14 or 15, further comprising:
a further providing unit configured for providing control data for controlling the industrial control system based on the immutable and tamper-resistant event data and/or the event reaction data.
